# EUROPÄISCHE PATENTSCHRIFT

(11) **EP 1 849 394 B1**
(45) Veröffentlichungstag und Bekanntmachung des Hinweises auf die Patenterteilung: **24.01.2018**
(21) Anmeldenummer: 07007670.8
(22) Anmeldetag: 14.04.2007
(51) Int. Cl.: A47L 15/42, D06F 39/00, F28D 21/00

(54) **Verfahren zur Rückgewinnung der von Wäschereimaschinen abgegebenen Wärmeenergie**
Method for recovery of the heat discharged by laundrette machines
Procédé de récupération de l'énergie thermique fournie par les laves-linges

(30) Priorität: 26.04.2006 DE 102006020003
(43) Veröffentlichungstag der Anmeldung: 31.10.2007
(73) Patentinhaber: Herbert Kannegiesser GmbH, 32602 Vlotho (DE)
(72) Erfinder: Bringewatt, Wilhelm, 32457 Porta Westfalica (DE); Engelbert, Heinz, 32602 Vlotho (DE)
(74) Vertreter: Möller, Friedrich

(56) Entgegenhaltungen:
- EP-A1- 0 160 775
- EP-A2- 0 048 235
- DE-A1- 3 111 680
- DE-A1- 4 219 164
- US-A- 4 509 345
- US-A1- 2004 188 058

## Beschreibung

Die Erfindung betrifft Verfahren zur Rückgewinnung der von Wäschereimaschinen abgegebenen Wärmeenergie.

In Wäschereien werden zum Waschen, Trocknen und Bügeln der Wäsche erhebliche Mengen an Energie, und zwar vor allem Wärmeenergie, benötigt. Diese Energie wird von der gewaschenen Wäsche aus der Wäscherei nicht ausgetragen, weil die Wäsche mit der gleichen Temperatur die Wäscherei verlässt, mit der sie als Schmutzwäsche angeliefert worden ist.

Bisher ist es üblich, die gesamte von Wäschereimaschinen abgegebene Wärmeenergie ungenutzt ins Freie zu leiten. Weil die Energiekosten ständig zunehmen, beeinflusst die benötigte Energie die Wirtschaftlichkeit einer Wäscherei erheblich. Ein Verfahren gemäss der Präambel des Anspruchs 1 zeigt die Schrift DE-A-3111680.

Ausgehend vom Vorstehenden liegt der Erfindung die Aufgabe zugrunde, ein Verfahren zur Rückgewinnung der von Wäschereimaschinen abgegebenen Wärmeenergie anzugeben, womit der Energiebedarf einer Wäscherei gesenkt werden kann.

Ein Verfahren zur Lösung dieser Aufgabe weist die Maßnahmen des Anspruchs 1 auf. Demnach wird die von mehreren Wäschereimaschinen abgegebene Wärmeenergie mindestens einem gemeinsamen Wärmetauscher zugeführt. Es kann Gruppen mehrerer Wäschereimaschinen mindestens ein zentraler Wärmetauscher zugeordnet werden. Es ist aber auch denkbar, allen Wäschereimaschinen einer Wäscherei oder in einem Raum der Wäscherei mindestens einen zentralen Wärmetauscher zuzuordnen. Dadurch kann die Wärmerückgewinnung zentral stattfinden. Im Bereich der jeweiligen Wäschereimaschine wird kein Platz für den mindestens einen Wärmetauscher benötigt. Vor allem kann die Anzahl der Wärmetauscher zur Wärmerückgewinnung reduziert werden. Es braucht nicht jeder Wäschereimaschine mindestens ein Wärmetauscher mit einer entsprechenden Prozesssteuerung zugeordnet zu werden.

Es ist weiterhin vorgesehen, die dem mindestens einen Wärmetauscher zugeführte Wärmeenergie umzuwandeln in Warmwasser und/oder Warmluft. Wenn die Temperatur des so erzeugten Warmwassers oder der Warmluft nicht der geforderten Solltemperatur zur Wiederverwendung in einer Wäschereimaschine ausreicht, braucht die erzeugte Warmluft oder das Warmwasser nur noch teilweise unter Einsatz zusätzlicher Energie auf die Solltemperatur aufgewärmt zu werden. Es ist aber auch denkbar, Warmwasser bzw. Warmluft zu erzeugen, die der Solltemperatur entspricht.

Gemäß einer bevorzugten Ausgestaltung der Erfindung ist vorgesehen, dem oder jedem Wärmetauscher die an mehreren oder allen Wäschereimaschinen anfallende feuchte Warmluft, sogenannte Wrasen, vorzugsweise nur Wrasen, zuzuführen. Die Wrasen enthalten noch einen Großteil der den Wäschereimaschinen zugeführten Energie. Es ist deshalb besonders lohnenswert, den Wrasen die Energie zu entziehen. Da die hohe Luftfeuchtigkeit der Wrasen eine direkte Wiederverwendung nicht zulässt, wird die in den Wrasen enthaltene Energie, nämlich Wärme, durch Wärmetauscher zurückgewonnen.

Bei einer bevorzugten Ausgestaltung der Erfindung werden die Wrasen im ersten Wärmetauscher entfeuchtet. Das kann auf verschiedene Weise mit an sich bekannten geeigneten Wärmetauschern, insbesondere Dampftrocknern, erfolgen. Vorzugsweise wird bei der Entfeuchtung eine Abkühlung der Wrasen vorgenommen. Dabei wird Wasser oder ein sonstiges Wärmeträgermedium erwärmt. Die dabei gewonnene Energie wird wiederverwendet. Außerdem kann die beim Entfeuchten der Wrasen entstehende getrocknete Luft, bei der es sich noch um Warmluft handelt, zu verschiedenen Zwecken wiederverwendet werden, beispielsweise zu Heizwecken und bevorzugt aber zur Zuführung zu entsprechenden Wäschereimaschinen, beispielsweise Trockner, Finisher oder Mangeln. Gemäss einer bevorzugte Weiterbildung des zuvor beschriebenen Verfahrens, wird das vom ersten Wärmetauscher erwärmte Wasser wird im Kreislauf durch den mindestens einen weiteren (zweiten) Wärmetauscher geführt, der wiederum Wasser und/oder Luft in einem Sekundärkreislauf erwärmt. Beim Wasser kann es sich um Frischwasser oder Brauchwasser handeln. Durch den Umweg des im ersten Wärmetauscher erwärmten Wassers über mindestens einen zweiten Wärmetauscher findet eine vollständige Isolation der zurückzugewinnende Energie enthaltenden Wrasen von dem zu erwärmenden Wasser oder auch Luft bzw. einem anderen Wärmeträgermedium statt, wodurch Flusen, Keime oder sonstige Verunreinigungen aus dem Wrasen nicht in die Luft, das Wasser oder das Wärmeträgermedium verschleppt werden, das erneut einer oder mehreren Wäschereimaschinen zugeführt wird.

Bevorzugt werden das vom zweiten Wärmeaustauscher erwärmte Wasser und/oder die Luft einer Waschmaschine, einer Waschschleudermaschine, einem Trockner, einem Finisher und/oder einer Mangel zugeführt. Die Luft, die den genannten Wäschereimaschinen zuzuführen ist, braucht dann nicht mehr oder nur noch in geringem Maße erwärmt zu werden, wodurch eine Energieeinsparung zustande kommt. Das Gleiche gilt für Wasser, das insbesondere einer Waschmaschine oder einer Waschschleudermaschine zuzuführen ist. Wenn es sich dabei um Frischwasser handelt, braucht kein kaltes Wasser auf die vorgesehene Solltemperatur durch zuzuführende Energie erwärmt zu werden; dieses erfolgt ganz oder teilweise durch Rückgewinnung der Energie in den von der jeweiligen Wäschereimaschine abgegebenen Wrasen. Eine bevorzugte Weiterbildung der zuvor beschriebenen Verfahrens, weist die Maßnahmen des Anspruchs 7 auf. Demnach ist vorgesehen, dass die von mindestens einer Wäschereimaschine abgegebene feuchte Warmluft, nämlich Wrasen, im ersten Wärmetauscher getrocknet wird. Dabei kann es sich bevorzugt um einen Dampftrockner handeln. Die getrocknete Abluft, vorzugsweise Wrasen, mindestens einer Wäschereimaschine, kann so wiederverwendet werden durch Ausnutzung der Restwärme in der getrockneten Warmluft.

Es ist auch denkbar, die getrocknete Warmluft durch einen weiteren Wärmetauscher zu leiten, der mit der getrockneten Warmluft die Sekundärluft, insbesondere Frischluft, erwärmt. Auf diese Weise wird vermieden, dass der Wäschereimaschine verunreinigte Warmluft aus den Wrasen, insbesondere Warmluft mit Flusen und/oder Keimen, zugeführt wird. Indem durch den weiteren Wärmeaustauscher Frischluft erwärmt wird, kann erwärmte reine Luft mit der darin enthaltenen Restenergie erneut zur Versorgung der in Betracht kommenden Wäschereimaschinen verwendet werden.

Bevorzugt wird entfeuchtete, getrocknete Warmluft verwendet für Trockner, Mangeln und/ oder Finisher.

Es ist auch denkbar, die im ersten Wärmetauscher getrocknete Luft, insbesondere Warmluft, zu entkeimen, insbesondere bevor sie einem Trockner, einer Mangel, einem Finisher oder einer sonstigen Wäschereimaschine zugeführt wird.Eine bevorzugte Weiterbildung der zuvor beschriebenen Verfahrens weist die Maßnahmen des Anspruchs 9 1 auf. Demnach wird bei der Energierückgewinnung erwärmtes Wasser, erwärmte Luft oder erwärmtes Wärmeträgermedium, vorzugsweise im weiteren, zweiten Wärmetauscher erwärmtes Wasser, mindestens teilweise gespeichert bzw. zwischengespeichert. Das geschieht zweckmäßigerweise in mindestens einem isolierten Speicherbehälter. Auf diese Weise ist eine Speicherung der zurückgewonnenen Energie möglich, bis sie gebraucht wird. Beispielsweise kann in Betriebspausen der Wäscherei, insbesondere über Nacht, das am vorhergehenden Tag gewonnene Warmwasser bis zum nächsten Arbeitstag gespeichert werden und somit zu Beginn des nächsten Arbeitstags sofort erwärmtes Wasser zur Speisung der Wäschereimaschinen eingesetzt werden, so dass bei Betriebsbeginn nicht kaltes Wasser zum Betrieb der Wäschereimaschinen aufgewärmt werden muss.

Bevorzugt lädt ein oder jeder Wärmetauscher mindestens einen Energiespeicher. Ein solcher Energiespeicher kann zu gegebener Zeit, wenn Energie an einer bestimmten Wäschereimaschine oder in der gesamten Wäscherei gebraucht wird, bedarfsweise abgerufen werden. Der Energiespeicher ermöglicht auch eine Kumulation der zurückgewonnenen Energie von der Abluft, dem Abwasser und insbesondere Wrasen von Wäschereimaschinen. Dadurch kann Warmluft oder auch Warmwasser gebildet werden, das mindestens die Temperatur und sogar eine höhere Temperatur aufweist als das Abwasser, die Abluft oder Wrasen der Wäschereimaschinen. Vorzugsweise weist dazu der Energiespeicher ein Energiespeichermedium auf, das Wärme mit einer Temperatur von über 100°C speichert.

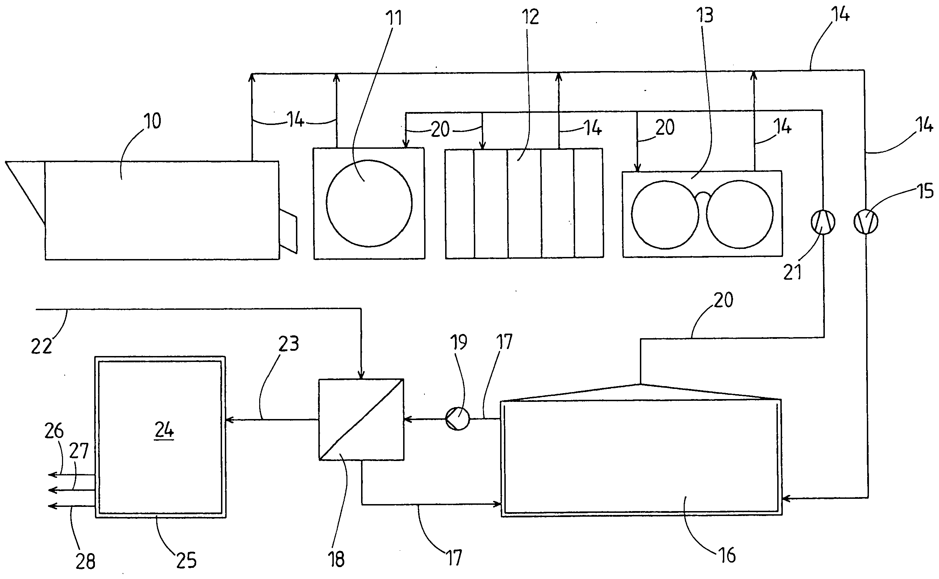

Ein bevorzugtes Ausführungsbeispiel der Erfindung wird anhand der Zeichnung näher erläutert. Die einzige Figur der Zeichnung zeigt:
Ein Flussdiagramm zur Veranschaulichung des erfindungsgemäßen Verfahrens.

Das hier dargestellte Verfahren dient dazu, die von Wäschereimaschinen abgegebene Energie, und zwar insbesondere Wärmeenergie, derart zurückzugewinnen, dass mindestens ein Teil der Energie zum Betrieb von vorzugsweise Wäschereimaschinen wiederverwendbar ist. Die Rückgewinnung von Energie kann sich auf alle in Wäschereien vorhandenen Wäschereimaschinen beziehen, die unverbrauchte Energie abgeben.

In der Zeichnung sind schematisch eine Waschmaschine, nämlich eine Durchlaufwaschmaschine 10, ein Trockner 11, ein Finisher 12 und eine Mangel 13 dargestellt. Bei diesen Wäschereimaschinen, worauf die Erfindung aber nicht beschränkt sein soll, fällt besonders viel Wärmeenergie an, die normalerweise nutzlos ins Freie geleitet wird. Von den Wäschereimaschinen wird Energie in Form feuchter Luft, sogenannte Wrasen, abgegeben. Die Wrasen weisen eine noch relativ hohe Temperatur auf, die über 100°C liegen kann. Bei der Erfindung geht es deshalb darum, die in den Wrasen noch enthaltene Energie mindestens teilweise zurückzugewinnen, so dass sie nicht nutzlos ins Freie abgeleitet werden muss.

In der Figur sind Wrasenleitungen 14 dargestellt, mit denen an der Durchlaufwaschmaschine 10, dem Trockner 11, dem Finisher 12 und der Mangel 13 anfallende Wrasen durch einen Verdichter 15 oder auch eine Pumpe 19 einem ersten Wärmetauscher 16 zuführbar sind. In diesem Wärmetauscher 16 findet eine Wrasenenergieumwandlung statt. Beim Wärmetauscher 16 handelt es sich beispielsweise um einen Dampftrockner.

Im Wärmetauscher 16 werden die diesem über die Wrasenleitungen 14 zugeführten Wrasen getrocknet. Dabei wird den Wrasen Energie entzogen, die zur Aufwärmung von Wasser im Wärmetauscher 16 dient. Das erwärmte Wasser wird im Kreislauf durch eine Wärmetauscherleitung 17 geführt, und zwar vom Wärmetauscher 16 zu einem weiteren, zweiten Wärmetauscher 18 und von diesem zurück zum ersten Wärmetauscher 16. Das Wasser wird durch eine Pumpe 19 in der Wärmetauscherleitung 17 umgewälzt.

Die im (ersten) Wärmetauscher 16 getrocknete Luft, insbesondere Warmluft, wird durch eine Warmluftleitung 20 von einem dieser zugeordneten Verdichter 21 oder einer Pumpe im gezeigten Ausführungsbeispiel zum Trockner 11, dem Finisher 12 und der Mangel 13 zurückgeführt. Durch entsprechende nicht gezeigte Ventile ist es möglich, die Menge der pro Zeiteinheit dem Trockner 11, dem Finisher 12 bzw. der Mangel 13 zugeführten Warmluft bedarfsweise zu verändern oder nur dem Trockner 11, dem Finisher 12 und/ oder der Mangel 13 Warmluft vom ersten Wärmetauscher 16 zuzuführen.

Dem zweiten Wärmetauscher 18 wird über eine Zulaufleitung 22 vorzugsweise kaltes Frischwasser oder Brauchwasser von der Durchlaufwaschmaschine 10 zugeführt. Das im zweiten Wärmetauscher 18 von der Wärmeenergie des über die Wärmetauscherleitung 17 vom ersten Wärmetauscher 16 umgewälzten Warmwassers erwärmte Brauchwasser oder Frischwasser wird über eine zweite Wärmetauscherleitung 23 einem Warmwasserspeicher 24 zugeführt. Im mit einer Isolierung 25 versehenen Warmwasserspeicher 24 wird die über den ersten Wärmetauscher 16 den Wrasen entzogene Energie in Form von Warmwasser, das vom zweiten Wärmetauscher 18 erwärmt worden ist, bis zur Wiederverwendung gespeichert.

Vom Warmwasserspeicher 24 münden drei Speiseleitungen 26, 27, 28 ab. Über die Speiseleitungen 26, 27, 28 ist erwärmtes Warmwasser wahlweise der Durchlaufwaschmaschine 10 oder eventuell auch einer anderen Wäschereimaschine, beispielsweise der Mangel 13, zuführbar. Über eine Speiseleitung 26, 27, 28 kann Warmwasser noch anderen Verwendungen zugeführt werden, die nicht unbedingt eine Wäscherei betreffen müssen, beispielsweise einer Fernwärmeheizung zum Heizen von Häusern oder Wohnungen.

Denkbar ist es auch, im Sekundärkreislauf des zweiten Wärmetauschers 18, nämlich der zweiten Wärmetauscherleitung 23, ein einen erhöhten Siedepunkt aufweisendes Wärmetauscher- oder Wärmeträgermedium im Kreislauf zu führen. Ein solches Medium kann auch in einem den Warmwasserspeicher 24 ersetzenden Wärmespeicher angeordnet sein. Dann ist diesem Wärmespeicher ein weiterer (dritter) Wärmetauscher zugeordnet, indem vom Wärmespeichermedium aus dem Wärmespeicher bei Bedarf Brauchwasser oder Frischwasser erwärmt wird, das einer Wäschereimaschine, insbesondere der Durchlaufwaschmaschine 10 und/oder der Mangel 13, zugeführt wird. Bei einer ölbeheizten Mangel 13 kann vom Wärmeträgermedium über den dritten Wärmetauscher auch Öl zur Beheizung der Mangelmulde der Mangel 13 aufgeheizt werden, und zwar auf Temperaturen über 100°C.

Das erfindungsgemäße Verfahren läuft mit der zuvor beschriebenen, zentralen Wärmerückgewinnungsanlage wie folgt ab:
Wrasen aus mehreren Wäschereimaschinen, im gezeigten Ausführungsbeispiel aus der Durchlaufwaschmaschine 10, gegebenenfalls einer nicht gezeigten Waschschleudermaschine, dem Trockner 11, der Mangel 13 und gegebenenfalls dem Finisher 12, wird zur zentralen Energierückgewinnung zum Wärmetauscher 16, der den genannten Wäschereimaschinen zugeordnet ist, geleitet.

Im Wärmetauscher 16 werden die Wrasen aus insbesondere der Durchlaufwaschmaschine 10, dem Trockner 11, der Mangel 13 und gegebenenfalls dem Finisher 12 getrocknet, also der feuchten Warmluft der Wrasen Feuchtigkeit entzogen. Dieses geschieht vorzugsweise nach dem Prinzip eines Dampftrockners, beispielsweise durch Hindurchleiten der Wrasen durch ein Wasserbad oder eine sonstige Flüssigkeit, so dass nach der Trocknung der Wrasen am Wärmetauscher 16 trockene Warmluft anfällt, die bedarfsweise der Durchlaufwaschmaschine 10, dem Trockner 11, der Mangel 13 und gegebenenfalls dem Finisher 12 wieder zuführbar ist. Gegebenenfalls kann in der zu den Wäschereimaschinen führenden Warmluftleitung 20 eine Einrichtung zum Entkeimen der Warmluft und/oder zum Filtern derselben, insbesondere zum Befreien von Flusen, zugeordnet sein. Dadurch werden Verunreinigen in der getrockneten Warmluft, die im Wärmetauscher 16 nicht beseitigt worden sind, aus der getrockneten Warmluft entfernt, bevor diese den Wäschereimaschinen wieder zugeführt wird.

Es ist des Weiteren vorgesehen, die beim Trocknen den Wrasen entzogene Energie einzusetzen zum Aufwärmen von Wasser oder einer sonstigen Flüssigkeit im Bad des ersten Wärmetauschers 16. Mit dieser erwärmten Flüssigkeit wird über den zweiten Wärmetauscher 18 Frischwasser, Brauchwasser oder ein anderes, einen höheren Siedepunkt aufweisendes Wärmeträgermedium indirekt aufgeheizt. Auf diese Weise kommt das Frischwasser, das Brauchwasser oder das Wärmeträgermedium nicht mit möglicherweise durch die Wrasen verunreinigte Flüssigkeit des ersten Wärmetauschers 16 in Kontakt. Es findet keine Verschleppung von Verunreinigungen der Wrasen in das von der Abwärme derselben erwärmte Frisch- oder Brauchwasser statt. Vor allem ist es durch den zweiten Wärmetauscher 18 auch möglich, die den Wrasen entzogene Wärmeenergie zu verwenden, um nicht Wasser, sondern ein anderes Medium, beispielsweise Öl oder ein einen höheren Siedepunkt als Wasser aufweisendes Wärmeträgermedium, auf verhältnismäßig hohe Temperaturen zu erwärmen.

Es ist des Weiteren vorgesehen, das durch den zweiten Wärmetauscher 18 erwärmte Frisch- oder Brauchwasser oder ein anderes Wärmeträgermedium zwischenzuspeichern. Durch diese Zwischenspeicherung kann die zurückgewonnene Energie bedarfsweise eingesetzt werden, das heißt, die zurückgewonnene Energie muss nicht sofort den Wäschereimaschinen zugeführt werden. Der Speicher ist zweckmäßigerweise isoliert, so dass in ihm eine hohe Temperatur aufweisende Flüssigkeit oder ein sonstiges Wärmeträgermedium über längere Zeit verbleiben kann, ohne nennenswert an Temperatur zu verlieren. Auf diese Weise kann die zurückgewonnene Energie am nächsten Arbeitstag verwendet werden, ohne dass bis dahin nennenswerte Energieverluste eintreten.

### Bezugszeichenliste:

- 10: Durchlaufwaschmaschine
- 11: Trockner
- 12: Finisher
- 13: Mangel
- 14: Wrasenleitung
- 15: Verdichter
- 16: Wärmetauscher
- 17: Wärmetauscherleitung
- 18: zweiter Wärmetauscher
- 19: Pumpe
- 20: Warmluftleitung
- 21: Verdichter
- 22: Zulaufleitung
- 23: zweite Wärmetauscherleitung
- 24: Warmwasserspeicher
- 25: Isolierung
- 26: Speiseleitung
- 27: Speiseleitung
- 28: Speiseleitung

## Patentansprüche

1. Verfahren zur Rückgewinnung der von Wäschereimaschinen abgegebenen Wärmeenergie, wobei die von mehreren Wäschereimaschinen abgegebene Wärmeenergie als feuchte Warmluft, insbesondere Wrasen, mindestens einem gemeinsamen Wärmetauscher (16, 18) zugeführt wird, wobei einem ersten Wärmetauscher (16) Wrasen von Waschmaschinen, Durchlaufwaschmaschinen (10) oder Waschschleudermaschinen, Trocknern (11), Mangeln (13) und/oder Finishern (12) zugeführt wird und durch die Wärmeenergie im Wrasen im ersten Wärmetauscher (16) Wasser erwärmt wird, dieses erwärmte Wasser durch mindestens einen weiteren Wärmetauscher (18) geführt wird, **dadurch gekennzeichnet, dass** das erwärmte Wasser im Kreislauf durch den mindestens einen weiteren Wärmetauscher (18) geführt wird und dass dadurch von dem oder jedem weiteren Wärmetauscher (18) Frischwasser oder Brauchwasser erwärmt wird, welches der Waschmaschine, Waschschleudermaschine oder Durchlaufwaschmaschine (10), oder der Mangel (13) zugeführt wird und/oder vom ersten Wärmetauscher (16) der Wrasen entfeuchtet wird und entfeuchtete Warmluft gegebenenfalls nach einer Aufheizung mindestens dem Trockner (11), dem Finisher (12) und/oder der Mangel (13) zugeführt wird.

2. Verfahren nach Anspruch 1, **dadurch gekennzeichnet, dass** die dem mindestens einen gemeinsamen Wärmetauscher (16, 18) zugeführte Wärmeenergie umgewandelt wird in Warmwasser und/oder Warmluft.

3. Verfahren nach Anspruch 1 oder 2, **dadurch gekennzeichnet, dass** der erste Wärmetauscher (16) die feuchte Warmluft bzw. Wrasen entfeuchtet, vorzugsweise durch eine Verringerung der Feuchtigkeit in den Wrasen bzw. der feuchten Warmluft.

4. Verfahren nach einem der vorhergehenden Ansprüche, **dadurch gekennzeichnet, dass** dem ersten Wärmetauscher (16), dem die Wrasen zugeführt werden, mindestens ein zweiter Wärmetauscher (18) zugeordnet, vorzugsweise nachgeordnet, ist.

5. Verfahren nach einem der vorhergehenden Ansprüche, **dadurch gekennzeichnet, dass** dieses erwärmte Wasser im Kreislauf durch den mindestens einen weiteren Wärmetauscher (18) geführt wird, der ein Wärmeträgermedium, Wasser und/oder Luft erwärmt.

6. Verfahren nach Anspruch 5, **dadurch gekennzeichnet, dass** das Wärmeträgermedium, das Wasser und/oder die Luft, die von dem oder jedem weiteren Wärmetauscher (18) erwärmt wird, mindestens einer Wäschereimaschine, vorzugsweise einer Waschmaschine, insbesondere einer Durchlaufwaschmaschine (10) oder einer Waschschleudermaschine, einem Trockner (11), einem Finisher (12) und/oder einer Mangel (13) zugeführt wird.

7. Verfahren zur Rückgewinnung der von Wäschereimaschinen abgegebenen Wärmeenergie, vorzugsweise nach mindestens einem der vorhergehenden Ansprüche, **dadurch gekennzeichnet, dass** von mindestens einer Wäschereimaschine abgegebene feuchte Warmluft als Wrasen im ersten Wärmetauscher (16) getrocknet wird.

8. Verfahren nach Anspruch 7, **dadurch gekennzeichnet, dass** die getrocknete Luft, insbesondere getrocknete Warmluft, mindestens einer Mangel (13), einem Finisher (12) und/oder einem Trockner (11) zugeführt wird, insbesondere die getrocknete Luft bzw. getrocknete Warmluft entkeimt wird, bevor sie bevorzugt mindestens einem Trockner (11), einer Mangel (13) und/oder einem Finisher (12) zugeführt wird.

9. Verfahren nach mindestens einem der vorhergehenden Ansprüche, **dadurch gekennzeichnet, dass** bei der Energierückgewinnung erwärmtes Wärmeträgermedium mindestens teilweise gespeichert bzw. zwischengespeichert wird.

10. Verfahren nach Anspruch 9, **dadurch gekennzeichnet, dass** das erwärmte Wärmeträgermedium in mindestens einem isolierten Speicher (24) zwischengespeichert wird, vorzugsweise von dem mindestens einen weiteren Wärmetauscher (18) erwärmtes Wasser.

11. Verfahren nach Anspruch 9 oder 10, **dadurch gekennzeichnet, dass** ein oder jeder Wärmetauscher (16, 18) mindestens einen Energiespeicher lädt, vorzugsweise der Energiespeicher ein Wärmeträgermedium aufweist, das Wärme mit einer Temperatur von über 100°C speichert.

12. Verfahren nach einem der Ansprüche 9 bis 11, **dadurch gekennzeichnet, dass** mit der im Speicher (24) gespeicherten Energie Luft, Frischwasser, Brauchwasser und/oder Öl für Waschmaschinen, Waschschleudermaschinen, Durchlaufwaschmaschinen (10), Mangeln (13), Trockner (11) und /oder Finisher (12) erwärmt wird.

## Claims

1. A method for recovering heat energy released by laundry machines, wherein the heat energy released by a plurality of laundry machines as moist hot air, in particular gland steam, is conducted to at least one common heat exchanger (16, 18), wherein a first heat exchanger (16) is supplied with gland steam from washing machines, tunnel washing machines (10) or hydroextractor spin-dryers, dryers (11) mangles (13) and/or finishers (12) and water is heated by the heat energy in the gland steam in the first heat exchanger (16), this heated water is conducted through at least a further heat exchanger (18), **characterized in that** the heated water is cycled in a loop through the at least one further heat exchanger (18) and that fresh water or wash water is thereby heated by the or every further heat exchanger (18), said water being supplied to the washing machine, hydroextractor spin-dryer or tunnel washing machine (10), or to the mangle (13) and/or the gland steam is dehumidified by the first heat exchanger (16) and dehumidified hot air, after being heated up if necessary, is fed at least to the dryer (11), the finisher (12) and/or to the mangle (13).

2. The method according to Claim 1, **characterized in that** the heat energy conducted to the at least one common heat exchanger (16, 18) is converted into hot water and/or hot air.

3. The method according to Claim 1 or 2, **characterized in that** the first heat exchanger (16) dehumidifies the moist hot air or gland steam, preferably by reducing the moisture in the gland steam or moist hot air.

4. The method according to one of the previous Claims, **characterized in that** at least one second heat exchanger (18) is assigned to, and preferably arranged downstream of, the first heat exchanger (16) that is supplied with gland steam.

5. The method according to one of the previous Claims, **characterized in that** this heated water is cycled in a loop through the at least one further heat exchanger (18), which heats a heat transfer medium, water and/or air.

6. The method according to Claim 5, **characterized in that** the heat transfer medium, the water and/or the air heated by the or each further heat exchanger (18) is fed to at least one laundry machine, preferably to a washing machine, in particular a tunnel washing machine (10) or a hydroextractor spin-dryer, a dryer (11), a finisher (12) and/or a mangle (13).

7. A method for recovering heat energy released by laundry machines, preferably according to at least one of the preceding Claims, **characterized in that** moist hot air discharged as gland steam by at least one laundry machine is dried in the first heat exchanger (16).

8. The method according to Claim 7, **characterized in that** the dried air, in particular dried hot air, is fed to at least one mangle (13), one finisher (12) and/or one dryer (11), in particular the dried air or dried hot air is sterilized before it is fed to preferably at least one dryer (11), one mangle (13) and/or one finisher (12).

9. The method according to at least one of the preceding Claims, **characterized in that** heat transfer medium heated during the recovery of energy is stored or temporarily stored at least in part.

10. The method according to Claim 9, **characterized in that** the heated heat transfer medium is temporarily stored in at least one insulated storage tank (24), preferably by water heated by the at least one further heat exchanger (18).

11. The method according to Claim 9 or 10, **characterized in that** one or each heat exchanger (16, 18) charges at least one energy store, with the energy store preferably having a heat transfer medium, which stores heat at a temperature greater than 100 °C.

12. The method according to one of the Claims 9 to 11, **characterized in that** air, fresh water, wash water and/or oil for washing machines, hydroextractor spin-dryers, tunnel washing machines (10), mangles (13), dryers (11) and/or finishers (12) is/are heated with the energy stored in the storage tank (24).

## Revendications

1. Procédé de récupération de l'énergie thermique dégagée par des machines de laverie, dans lequel on envoie l'énergie thermique dégagée par plusieurs machines de laverie sous forme d'air chaud humide, en particulier de vapeurs, à au moins un échangeur de chaleur commun (16, 18), dans lequel on envoie à un premier échangeur de chaleur (16) des vapeurs provenant de lave-linge, de lave-linge continus (10) ou de lave-linge centrifuges, de sèche-linge (11), de calandres (13) et/ou de calandres finisseuses (12) et on chauffe de l'eau au moyen de l'énergie thermique des vapeurs dans le premier échangeur de chaleur (16), on conduit cette eau chauffée à travers au moins un autre échangeur de chaleur (18), **caractérisé en ce que** l'on conduit l'eau chauffée en circuit à travers ledit au moins un autre échangeur de chaleur (18) et **en ce que** l'on chauffe ainsi par le ou chaque autre échangeur de chaleur (18) de l'eau fraîche ou de l'eau sanitaire, qui est envoyée au lave-linge, au lave-linge continu ou au lave-linge centrifuge (10), ou à la calandre (13) et/ou on déshumidifie les vapeurs au moyen du premier échangeur de chaleur (16) et on envoie de l'air chaud déshumidifié éventuellement après un chauffage au moins au sèche-linge (11), à la calandre finisseuse (12) et/ou à la calandre (13).

2. Procédé selon la revendication 1, **caractérisé en ce que** l'on convertit l'énergie thermique envoyée audit au moins un échangeur de chaleur commun (16, 18) en eau chaude et/ou en air chaud.

3. Procédé selon la revendication 1 ou 2, **caractérisé en ce que** le premier échangeur de chaleur (16) déshumidifie l'air chaud humide ou les vapeurs, de préférence par une diminution de l'humidité dans les vapeurs ou dans l'air chaud humide.

4. Procédé selon l'une quelconque des revendications précédentes, **caractérisé en ce qu'**au moins un deuxième échangeur de chaleur (18) est associé, et est de préférence disposé en aval, au premier échangeur de chaleur (16), auquel les vapeurs sont envoyées.

5. Procédé selon l'une quelconque des revendications précédentes, **caractérisé en ce que** l'on conduit cette eau chauffée en circuit à travers ledit au moins un autre échangeur de chaleur (18), qui chauffe un fluide caloporteur, de l'eau et/ou de l'air.

6. Procédé selon la revendication 5, **caractérisé en ce que** l'on envoie le fluide caloporteur, l'eau et/ou l'air, qui est chauffé par le ou l'autre échangeur de chaleur (18), à au moins une machine de laverie, de préférence à un lave-linge, en particulier un lave-linge continu (10) ou un lave-linge centrifuge, à un sèche-linge (11), à une calandre finisseuse (12) et/ou à une calandre (13).

7. Procédé pour la récupération de l'énergie thermique dégagée par des machines de laverie, de préférence selon au moins une des revendications précédentes, **caractérisé en ce que** l'on sèche dans le premier échangeur de chaleur (16) de l'air chaud humide dégagé sous forme de vapeurs par au moins une machine de laverie.

8. Procédé selon la revendication 7, **caractérisé en ce que** l'on envoie l'air séché, en particulier l'air chaud séché, au moins à une calandre (13), une calandre finisseuse (12) et/ou un sèche-linge (11), en particulier on désinfecte l'air séché ou l'air chaud séché avant de l'envoyer de préférence au moins à un sèche-linge (11), une calandre (13) et/ou une calandre finisseuse (12).

9. Procédé selon au moins une des revendications précédentes, **caractérisé en ce que** l'on accumule ou on accumule provisoirement au moins en partie du fluide caloporteur chauffé lors de la récupération d'énergie.

10. Procédé selon la revendication 9, **caractérisé en ce que** l'on accumule provisoirement le fluide caloporteur chauffé dans au moins un réservoir isolé (24), de préférence de l'eau chauffée par ledit au moins un autre échangeur de chaleur (18).

11. Procédé selon la revendication 9 ou 10, **caractérisé en ce que** le ou chaque échangeur de chaleur (16, 18) charge au moins un accumulateur d'énergie, de préférence l'accumulateur d'énergie présente un fluide caloporteur, qui accumule de la chaleur à une température de plus de 100°C.

12. Procédé selon l'une quelconque des revendications 9 à 11, **caractérisé en ce que** l'on chauffe avec l'énergie accumulée dans l'accumulateur (24) de l'air, de l'eau fraîche, de l'eau sanitaire et/ou de l'huile pour des lave-linge, des lave-linge centrifuges, des lave-linge continus (10), des calandres (13), des sèche-linge (11) et/ou des calandres finisseuses (12).
